# EUROPEAN PATENT SPECIFICATION

(11) **EP 1 099 374 B1**
(45) Date of publication and mention of the grant of the patent: **09.06.2004**
(21) Application number: 00203816.4
(22) Date of filing: 01.11.2000
(51) Int. Cl.: A01K 15/04

(54) **Device for the prevention of cows kicking their hind legs during the milking process**
Vorrichtung zur Verhinderung des Ausschlagens von Kühen während des Melkprozesses
Dispositif pour empêcher les vaches de donner des coups de pattes arrières pendant la traite

(30) Priority: 09.11.1999 NL 1013527
(43) Date of publication of application: 16.05.2001
(73) Proprietor: Metal Inventions Holland BV, 7000 AK Doetinchem (NL)
(72) Inventor: Ebbers, Lambertus Wilhelmus, 7007 CJ Doetinchem (NL)

(56) References cited:
- BE-A- 744 094
- FR-A- 1 430 723
- ALFA-LAVAL: ""nonkick" de spanbeugel voor uw veiligheid" 15 January 1968 (1968-01-15) , ALFA-LAVAL , HET LANDBOUWWERKTUIG XP002140984 * the whole document *

## Description

This invention is an apparatus that aims to prevent restless cows from kicking their hind legs during milking to ensure that the milking process can take place undisturbed. The apparatus consists of a round tube having curved ends, one of which is placed in a slant above the udder in the groin and the other is placed firmly over the cow's spine. In order to adjust the kickbar to fit the cow, a "click" system is adopted; this is also known as the "tent-pole" system.
A similar device has been widely available since 1966 and is used by the majority of milk-farmers the whole world over.

However, the present model (there is actually only one model available) has the following disadvantages:
Whenever extra tension is exerted on the kickbar it becomes difficult to remove it. The control knob on the spring is so small as to prevent any force being used on it. The knob must often be forced in with a blow from a hammer or a similar object resulting in built-up pressure suddenly being released and the kickbar is then apt to fall to two pieces, sometimes causing physical injury or damage to the milking installation.
Any movements made by the cow against the tubes of the milking-installation could press against the spring-pin on the kickbar resulting in any of the above problems.
When removing the kickbar under normal circumstances, it should always be raised by a few centimetres from underneath before it can be turned over the cow's back and removed. But this method causes the cow unnecessary irritation and may provoke an aggressive reaction. Another disadvantage of this construction lies in the operation of the spring catch. It is often very difficult to press the small pin in deep enough to adjust the length of the kickbar. This often results in painful fingers and/or broken nails. The construction of the pin on the spring in the existing models is not strong enough to withstand its purpose and this often leads to complaints about its durability.
This invention intends to resolve the above problems in the following ways:

The kickbar consists of two curved sections that are mounted to a middle section by sliding them in. The spring construction which connects the curved sections to the middle section is so designed that either a fixed position or an adjustable position can be selected. The push-button mounted in the groove on the middle section is also shaped in such a way that the three sections remain together under any circumstance, even when pulled vigorously or hit with a hammer.

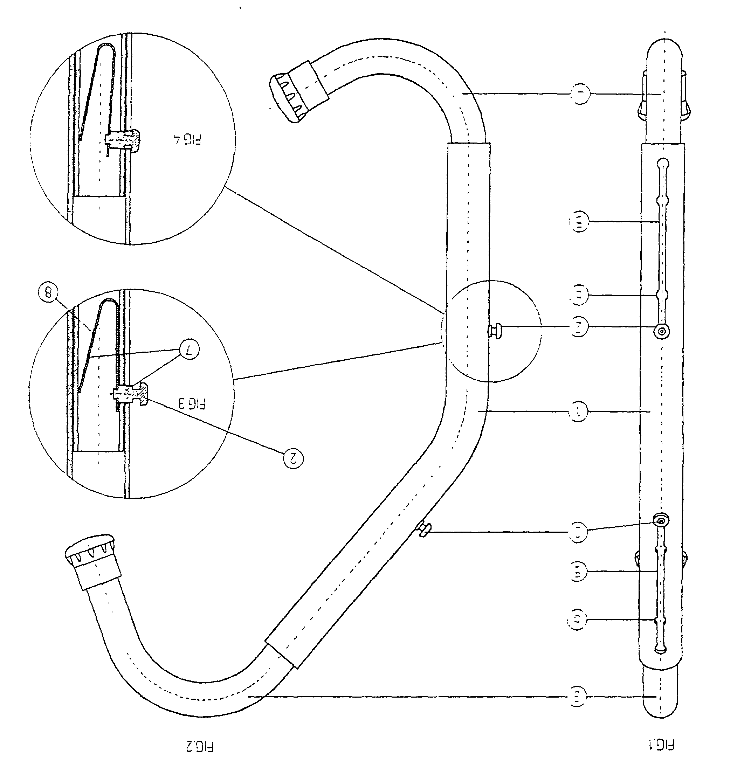

If the press-button is accidentally pressed against an object by the cow herself, the kickbar may indeed come undone but will remain in position on the cow and will not fall apart causing damage. When the milk-farmer realises that the kickbar is slack, he or she does not need to react immediately but can, at a more opportune moment, adjust it again or remove it with a simple hand-movement. Due to the bigger push-button and its special construction, removal of the kickbar after milking is made easier for the milk-farmer and is kinder for the animal. This is because the milk-farmer can operate the spring with the thumb allowing the kickbar to be released immediately and it can be pulled away over the cow's back preventing in this way any unnecessary irritation to the cow by creating pressure with the lower curved section.
An additional advantage of the 9 mm. diameter spring pin (normally 7 mm. ) is that it provides a wider support area on the spring, ensuring stronger construction and longer durability.
The invention is further illustrated with the help of a design and construction example in the following diagrams.
The spring's press-button (2), part of the spring's construction (7), enables the kickbar to be set in the so-called fixed position (fig. 3). Given its shape and in combination with the groove (5) in the middle section, when pressed the kickbar is loosened. This is now in the so-called "sliding" position (fig. 4) and from this position the milk-farmer is then able to remove it or eventually tighten it again. The eight circular notches (6) in the groove (5) on the middle section (1) are meant to be able to form sixteen setting positions depending on the size and shape of the particular cow. In order to do this a simple thumb-press is sufficient in combination with a sliding in- or out-movement of the curved parts (3 & 4) in the middle section (1).

## Claims

1. An apparatus for the prevention of animals kicking their hind legs, consisting of two curved sections (3) and (4), which slide in a middle section (1) **characterized in that** notches (6) are made evenly along a groove (5) in the middle section (1) so that whenever a spring press-button (2) is pressed in it is automatically forced into notch (6) by way of a simple sliding in and out of the curved section and by the pressure of a spring (8), in this way the entire kickbar is adjusted to the required size and the aforementioned spring press-button (2) on spring construction (7), being shaped in such a way and mounted in the curved sections (3 and 4) and secured in groove (5) of the middle section (1), ensures that even when the kickbar is unfastened the curved sections always remain secured to the middle section and in this way it cannot fall into three separate pieces.

## Patentansprüche

1. Einrichtung, die Tiere daran hindert, mit den Hinterbeinen auszuschlagen, bestehend aus zwei gebogenen Teilen (3) und (4), verschiebbar in einem Mittelstück (1), **dadurch gekennzeichnet, dass** sich in dem Mittelstück (1) eine Rille (5) befindet, die in regelmäßigen Abständen Aussparungen (6) aufweist, sodass, wenn die Federtaste (2) eingedrückt wird, diese genannte Federtaste (2) durch einfaches Ein- oder Ausschieben des gebogenen Teils durch den Federdruck (8) automatisch in die Aussparung (6) gedrückt wird, wodurch der ganze Bügel auf die gewünschte Abmessung fixiert und die Federtaste (2) der Federkonstruktion (7) so geformt und so in dem gebogenen Teil (3) und (4) montiert und in der Rille (5) des Mittelstücks (1) arretiert wird, dass die gebogenen Teile des Bügels, selbst wenn dieser nicht gespannt ist, immer im Mittelteil fixiert bleiben und der Bügel demnach nicht in seine drei Bestandteile auseinander fallen kann.

## Revendications

1. Dispositif pour empêcher que les animaux ruent, comprenant deux parties courbées (3) et (4), coulissant dans une pièce centrale (1) avec la caractéristique que la fente (5) dans la pièce centrale (1) est pourvue d'encoches (6) à des distances régulières, de sorte que, en appuyant sur le bouton-poussoir à ressort, par le simple coulissement de la partie courbée vers l'intérieur ou l'extérieur, la pression du ressort (8) fait que le bouton-poussoir à ressort (2) susnommé est poussé automatiquement dans l'encoche (6), de sorte que l'étrier en entier est fixé sur cette mesure et où le bouton-poussoir à ressort (2) susnommé de la construction à ressort (7) est formé de telle manière que, monté dans la partie courbée (3) et (4) et enfermé dans la fente (5) de la partie centrale, lorsque l'étrier est détendu les parties courbées restent toujours introduites dans la partie centrale ayant comme résultat que l'étrier ne peut donc pas se scinder en trois parties.
